(19) Europäisches Patentamt
European Patent Office
Office européen des brevets

(11) **EP 1 835 493 A2**

(12) **EUROPEAN PATENT APPLICATION**

(43) Date of publication:
**19.09.2007 Bulletin 2007/38**

(51) Int Cl.:
**G11B 7/007** (2006.01)    **G11B 7/24** (2006.01)

(21) Application number: **07100896.5**

(22) Date of filing: **22.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.03.2006 JP 2006075693**

(71) Applicant: **KABUSHIKI KAISHA TOSHIBA**
**Tokyo 105-8001 (JP)**

(72) Inventors:
• **Oomachi, Noritake**
  **Minato-ku**
  **Tokyo 105-8001 (JP)**

• **Matsumaru, Masaaki**
  **Minato-ku**
  **Tokyo 105-8001 (JP)**
• **Yamamoto, Ryosuke**
  **Minato-ku**
  **Tokyo 105-8001 (JP)**

(74) Representative: **Henkel, Feiler & Hänzel**
**Patentanwälte**
**Maximiliansplatz 21**
**80333 München (DE)**

(54) **Optical disk and optical disk apparatus**

(57)    An optical disk has transparent substrate layer (11) provided at light incidence side, first information layer (12) which has first groove of first depth (H1), adhesive layer (13) provided on the first information layer, and second information layer (14) which has second groove of second depth (H2) that is deeper than the first depth, and irreversibly records information therein, wherein the first depth and the second depth are $\lambda/2n$ or less, the width of the first and second grooves is 0.3 $\mu$m or less, the track pitch of the first and second grooves is 0.45 $\mu$m or less, the first and second information layers include organic dye material having light absorption in the range of the wavelength $\lambda$ of laser beam for use in recording and reproducing information from 390 nm to 420 nm.

FIG. 1

⇧ Laser beam

**Description**

One embodiment of the invention relates to an optical disk of multilayer type that enables the recording and reproduction of information from a light incidence plane side to a plurality of recording films, and an optical disk apparatus that performs the recording and reproducing operation.

With regard to optical disks as information recording media, optical disks of the DVD standard that can record video and music contents are widely used. Examples of such optical disks include a play-only type, a write-once type to which information can be recorded once, and a rewritable type represented by an external memory of a computer and a playback video. The optical disk of the DVD standard has a structure in which two substrates of 0.6 mm (nominal) in thickness are pasted with each other. The NA of an objective lens is 0.6, and the wavelength of laser beam for use in recording/reproduction is 650 nm.

In recent years, there has been a demand for an increased memory capacity. As methods of increasing the memory capacity, there are lengthening the short wave of a light source, increasing the number of numeric apertures of an objective lens, improving the modulation and demodulation technologies, improving the format efficiency, increasing the number of multi layers, and the like. In the HD DVD standard, blue laser of wavelength around 405 nm is employed, whereby the recording density is greatly enhanced and the capacity is increased. In addition, since the NA of an objective lens is set 0.65, the compatibility with the current DVD is attained. However, for a further increased capacity, the development of multilayer information recording media is now under its way.

In such multilayer information recording media, an organic dye material and an inorganic dye material are employed as material to be used in a groove of a recording layer, and at the same time, information concerning the depth of the groove of the recording layer is also known.

However, there is no disclosure in prior systems as to how the depth of the groove and the like should be set in the case where an organic dye material is used in the groove of the recording layer. More specifically, the organic dye material cannot be processed by vapor deposition, and the organic dye material is fixed onto the groove only by a method of apply the material in a liquid state. For example, in the case when the organic dye material does not flow into the depth of the groove, there occur nonconformities including shortened service life of the recording layer, and deteriorated reliability.

An object of the present invention is to provide a highly reliable optical disk by providing standards of the guide slot depth and the like for precisely applying an organic dye material onto a guide slot of a recording layer.

An optical disk comprising:

a transparent substrate layer provided at a light incidence side;
a first groove of a first depth;
a first information layer, the first information layer recording information therein; an adhesive layer;
a second groove of a second depth that is deeper than the first depth; and
a second information layer, the second information layer recording information therein, wherein
the first depth and the second depth are $\lambda/2n$ or less by use of a wavelength $\lambda$,
the width of the first and second grooves is 0.3 $\mu$m or less,
the track pitch of the first and second grooves is 0.45 $\mu$m or less,
the first and second information layers include an organic dye material having light absorption in the range of the wavelength $\lambda$ of laser beam for use in recording and reproducing information from 390 nm to 420 nm.

Another object of the present invention is to provide a two-layer recordable optical disk that uses an organic dye material in a guide slot of a recording layer thereof and has various standards of the guide slot depth and the like for improving the operation reliability thereof.

The invention can be more fully understood from the following detailed description when taken in conjunction with the accompanying drawings, in which:

FIG. 1 is a cross sectional view showing an example of the size of a groove in a two-layer recordable optical disk according to an embodiment of the present invention;
FIG. 2 is a cross sectional view showing an example of the layer structure of the two-layer recordable optical disk according to an embodiment of the present invention;
FIG. 3 is a cross sectional view showing an example of the layer structure of the two-layer recordable optical disk according to an embodiment of the present invention;
FIG. 4 is a graph showing an example of the influence that (first information layer groove depth H1)/(second information layer groove depth H2) gives upon the signal change width of a first information layer, in the two-layer recordable optical disk according to an embodiment of the present invention;
FIG. 5 is a graph showing an example of the influence that the H1/H2 gives upon the recording and reproducing characteristics of the first information layer, in the two-layer recordable optical disk according to an embodiment of the present invention;

FIG. 6 is a graph showing an example of the influence that the H1/H2 gives upon the first information layer endurance time and the second information layer endurance time, in the two-layer recordable optical disk according to an embodiment of the present invention;

FIG. 7 is a cross sectional view showing an example of another structure of the two-layer recordable optical disk according to an embodiment of the present invention;

FIG. 8 is a cross sectional view showing an example of another structure of the two-layer recordable optical disk according to an embodiment of the present invention;

FIG. 9 is a cross sectional view showing an example of another structure of the two-layer recordable optical disk according to an embodiment of the present invention;

FIG. 10 is a cross sectional view showing an example of another structure of the two-layer recordable optical disk according to an embodiment of the present invention;

FIG. 11 is a graph showing an example of the influence that the H1/H2 gives upon the signal change width of the first information layer when the first information layer groove depth H1 is made constant, in the two-layer recordable optical disk according to an embodiment of the present invention;

FIG. 12 is a graph showing an example of the influence that the H1/H2 gives upon the recording and reproducing characteristics when the first information layer groove depth H1 is made constant, in the two-layer recordable optical disk according to an embodiment of the present invention;

FIG. 13 is a graph showing an example of the influence that the H1/H2 gives upon the first information layer endurance time and the second information layer endurance time when the first information layer groove depth H1 is made constant, in the two-layer recordable optical disk according to an embodiment of the present invention;

FIG. 14 is a graph showing an example of the influence that the H1/H2 gives upon the signal change width of the first information layer, in Comparative examples 1, 2 and 3 in the two-layer recordable optical disk according to an embodiment of the present invention;

FIG. 15 is a graph showing an example of the influence that the H1/H2 gives upon the recording and reproducing characteristics, in Comparative examples 1, 2 and 3 in the two-layer recordable optical disk according to an embodiment of the present invention;

FIG. 16 is a graph showing an example of the influence that the H1/H2 gives upon the first information layer endurance time and the second information layer endurance time, in Comparative examples 1, 2 and 3 in the two-layer recordable optical disk according to an embodiment of the present invention;

FIG. 17 is a block diagram showing an example of an optical disk apparatus that handles the two-layer recordable optical disk according to an embodiment of the present invention;

FIG. 18 is an explanatory view showing a general parameter setting example of the two-layer recordable optical disk according to an embodiment of the present invention;

FIG. 19 is an explanatory view showing wobble shapes and address bits in an address bit area in the two-layer recordable optical disk according to an embodiment of the present invention;

FIG. 20 is an explanatory view showing the arrangement in a wobble data unit concerning a primary position and a secondary position of a modulation area in the two-layer recordable optical disk according to an embodiment of the present invention;

FIG. 21 is an explanatory view showing the data structure in wobble address information of the two-layer recordable optical disk according to an embodiment of the present invention;

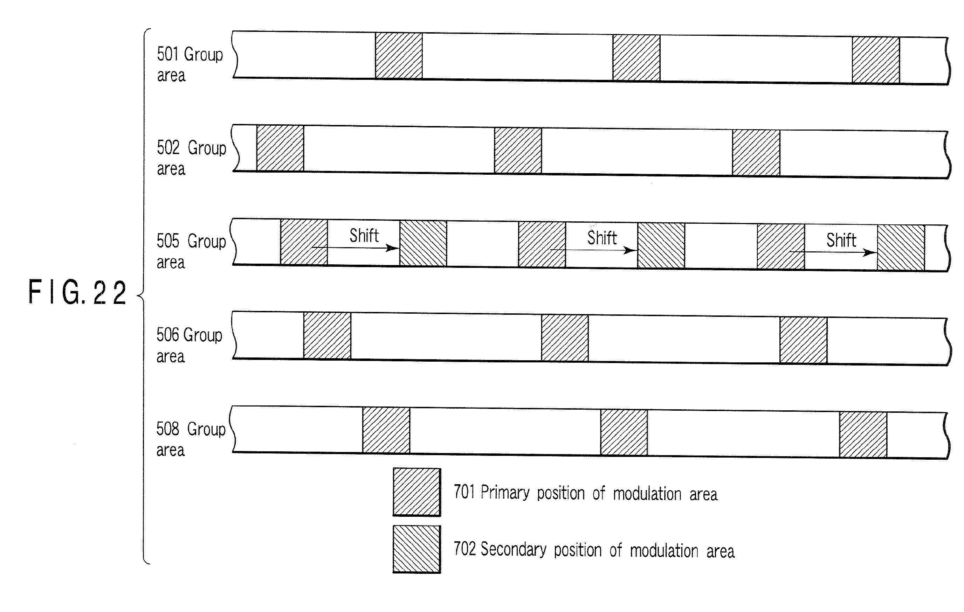

FIG. 22 is an explanatory view showing the arrangement place of the modulation area in the two-layer recordable optical disk according to an embodiment of the present invention;

FIG. 23 is an explanatory view showing a method of measuring Wppmax and Wppmin in the two-layer recordable optical disk according to an embodiment of the present invention;

FIG. 24 is an explanatory view showing the characteristics of a wobble signal and a track displacement signal in the two-layer recordable optical disk according to an embodiment of the present invention;

FIG. 25 is an explanatory view showing a method of measuring a (I1-I2)pp signal in the two-layer recordable optical disk according to an embodiment of the present invention;

FIG. 26 is a block diagram showing a measuring circuit of NBSNR to the square waveform of the wobble signal in the two-layer recordable optical disk according to an embodiment of the present invention;

FIG. 27 is an explanatory view showing a method of measuring NBSNR in the two-layer recordable optical disk according to an embodiment of the present invention;

FIG. 28 is a graph showing an example of spectrum analyzer detection signal characteristics of a wobble signal by phase modulation in the two-layer recordable optical disk according to an embodiment of the present invention; and

FIG. 29 is a graph showing an example of the spectrum analyzer waveform of a phase-modulated wobble signal in the two-layer recordable optical disk according to an embodiment of the present invention.

Various embodiments according to the invention will be described hereinafter with reference to the accompanying drawings. In general, according to one embodiment of the invention, an optical disk comprising: a transparent substrate layer provided at a light incidence side; a first information layer which is formed on the transparent substrate layer, and has a first groove of a first depth, the first information layer irreversibly recording information therein; an adhesive layer provided on the first information layer; and a second information layer which is formed on the adhesive layer, and has a second groove of a second depth that is deeper than the first depth, the second information layer irreversibly recording information therein, wherein the first depth and the second depth are $\lambda/2n$ or less by use of a wavelength $\lambda$, the width of the first and second grooves is 0.3 $\mu$m or less, the track pitch of the first and second grooves is 0.45 $\mu$m or less, the first and second information layers include an organic dye material having light absorption in the range of the wavelength $\lambda$ of laser beam for use in recording and reproducing information from 390 nm to 420 nm. In one embodiment of the invention, a groove is concave and the wobbled guidance track. In one embodiment, a land is convex and the area between the grooves. In one embodiment, the track pitch is the distance measured between a center of the groove and the center of an adjacent groove.

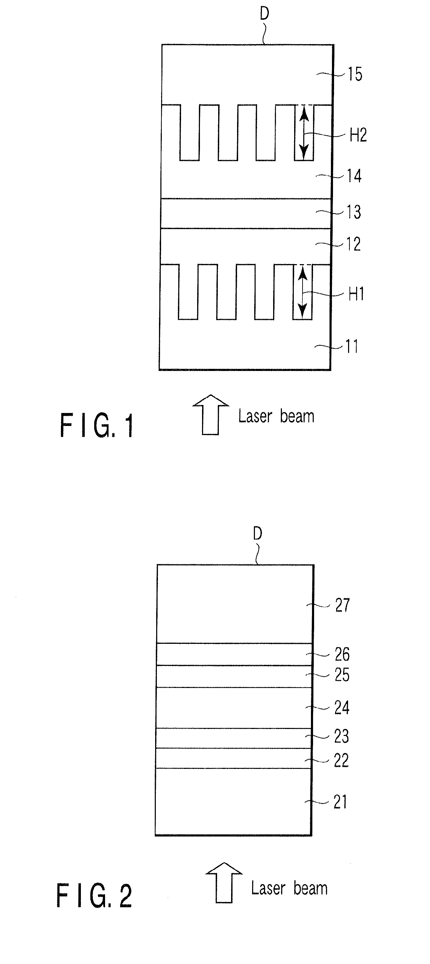

Embodiments according to the present invention will be illustrated in more details with reference to the accompanying drawings. FIG. 1 is a cross sectional view showing an example of the structure of a two-layer recordable optical disk according to an embodiment of the present invention.


First embodiment of optical disk according to the invention


Structure and Material


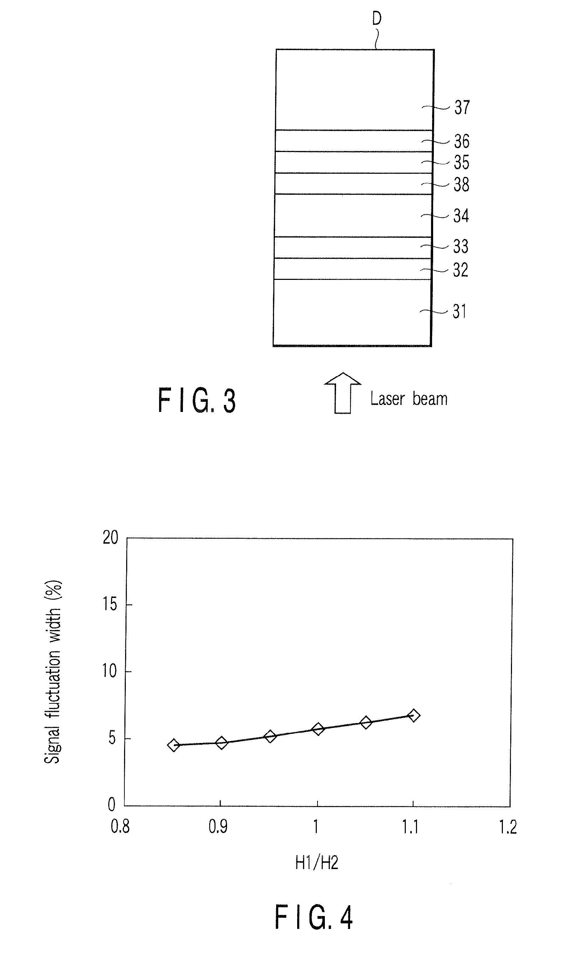

FIG. 1 is a cross sectional view showing an example of the size of a groove in a two-layer recordable optical disk according to an embodiment of the present invention. FIG. 2 is a cross sectional view showing an example of the layer structure thereof. FIG. 3 is a cross sectional view showing an example of the layer structure thereof. FIG. 1 shows only a substrate, and FIG. 2 shows a state in which information recording layers are formed on substrates and the substrates are pasted with each other.

In an optical disk D according to the invention, as shown in FIG. 1, a transparent substrate 11, a first information layer 12, an adhesive layer (intermediate layer) 13, a second information layer 14, and a substrate 15 are arranged from the incident laser beam side in this sequence. As the substrate 11 or 15, a polycarbonate (PC) substrate or a glass substrate may be employed. In the substrate or the adhesive layer, a groove for tracking laser beam for recording and reproducing information is normally formed. In FIG. 1, the depth of a groove formed in the first information layer 12 is H1 nm, and the depth of a groove formed in the second information layer 14 is H2 nm.

In this optical disk, a laser beam focused by an objective lens is radiated from the transparent substrate 11 side, whereby information is recorded and reproduced in/from the first information layer 12 and the second information layer 14.

Meanwhile, in the first information layer 12 and the second information layer 14, it is preferable that a reflection ratio of a recorded area where information has been recorded is higher than that of an unrecorded area where information is not recorded. However, the present invention is not limited to thereto.

As shown in FIG. 2, the first information layer has a structure in which a recording layer 22 and a reflection layer 23 are laminated sequentially on the transparent substrate 21. An adhesive layer 24, a recording layer 25 as the second information layer, and a reflection layer 26 are laminated thereon.

Further, as shown in FIG. 3, a dielectric film layer 38 is inserted into between the adhesive layer 34 and the recording layer 35 as the second information layer in some cases. As the recording layer used for the first information layer and the second information layer, an organic dye material that has its absorption maximum at the shorter wavelength than the wavelength of the laser beam for recording and reproducing (H to L polarity), or that has its absorption maximum at the longer wavelength (L to H polarity) may be employed. In consideration of the recording and reproducing characteristics such as the resolution of the recording film, it is preferable to employ cyanine dye, phthalocyanine dye and the like that have the absorption maximum at the longer wavelength side than the wavelength of the laser beam for recording and reproducing. A metal film made mainly of Ag, Au, Cu, Al, Ti and the like may be employed to the reflection film.

In the two-layer recordable optical disk in which the wavelength of the laser beam for use in recording and reproducing information is 390 nm or more and 420 nm or less, and the organic dye material is used, the depth H1 of the groove formed in the first information layer is made shallower than the depth H2 of the groove formed in the second information layer. Consequently, it is possible to prevent the decrease of the recording and reproducing signal quality owing to leakage entrance of signals from a non-reproducing layer, and to make equal the environment durability of the first information layer and the second information layer. It is preferable that both H1 and H2 are shallower than $\lambda/2n$. If they become deeper than this, the decrease of the modulation degree becomes large, and preferable recording and reproducing characteristics cannot be attained.

Groove depth test and the like

With respect to two-layer recordable disks in which the groove depth H2 of the second information layer is fixed, and the groove depth H1 of the first information layer is made such that H1/H2 becomes 0.85 to 1.1, the leakage entrance of recording and reproducing signals from the non-reproducing layer and environment durability were compared.

FIG. 4 shows the signal fluctuation width in recording reproducing signals of the first information layer. The signal fluctuation width shown herein is a rate (%) of the fluctuation amplitude to the signal amplitude. The signal fluctuation width fluctuates at a frequency where there are recording and reproducing signals of a reproducing layer owing to the influence of the leakage entrance of signals from the non-reproducing layer, and it is preferably small because the fluctuation width affects greatly upon reproducing characteristics. The signal fluctuation width slightly decreases in association with the decrease of H1/H2.

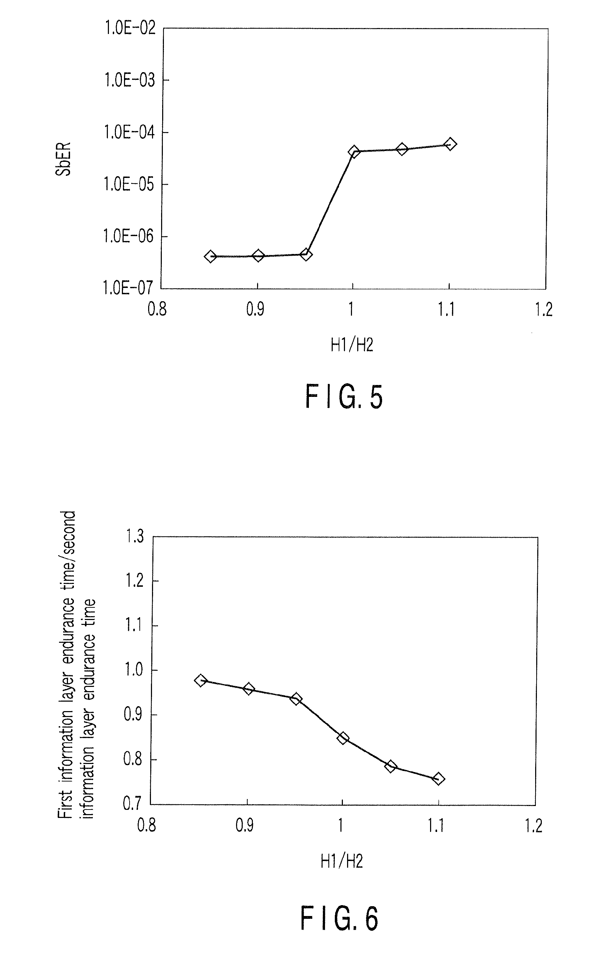

FIG. 5 shows the result of SbER (simulated bit Error Rate, reference document: Y. Nagai: Jpn. J. Appl. Phys. 42 (2003) 971.) as the recording and reproducing characteristics at the time. It is confirmed that there was no significant change in the signal fluctuation width, but SbER was improved greatly at H1 < H2 < 1.0. This is because when the signal fluctuation width becomes smaller than a certain value, it hardly affects upon SbER.

FIG. 6 shows the relation between endurance time of the first information layer and endurance time of the second information layer in this disk. The endurance time herein means the time to the moment when a recorded mark is accelerated under the condition of 85°C and 85%, and a mark recorded before acceleration can be reproduced without problem. It is ideal that the endurance time of the first information layer is equal to the endurance time of the second information layer. However, if the difference is ±10%, there is no practical problem. In other words, it is found that in one embodiment, the condition of $0.9 \leq$ (first information layer endurance time)/(second information layer endurance time) $\leq 1.1$ is required.

From FIG. 6, this condition is satisfied at H1/H2 < 1.0. In the two-layer recordable optical disk, it is necessary to make the recording film thin in the first information layer so as to secure the optical transmittance. However, by controlling H1 and H2, the organic dye material is applied flat and uniform, and it is possible to make the durability at high temperature and high humidity same as that of the information recording layer arranged at the depth.

The thickness of the substrate used is set to 580 $\mu$m or more and 600 $\mu$m or less. If the thickness of the adhesive layer formed between the first information layer and the second information layer is too thin, the leakage entrance from the non-reproducing layer becomes large, and if it is too thick, the influence of spherical aberration becomes strong in the second information layer. For this reason, it is desirable that the thickness is 20 $\mu$m or more and 35 $\mu$m or less. In particular, it is desirable that the thickness X of the first substrate is f(n)-13 $\mu$m or more, the thickness Y of the adhesive layer formed between the first information layer and the second information layer is 20 $\mu$m or more, and the condition of $dX + Y \leq f(n)+30$ $\mu$m, and $f(n)+1$ $\mu$m $\leq X+Y/2$ is satisfied. Herein, $f(n) = (A1 \times n3) (n2 + A2) / (n2 - 1) (n2 + A3) \times 1000$ ($\mu$m) is obtained, wherein n is a refraction index of a first substrate, A1 is 0.26200, A2 is -0.32400, and A3 is 0.00595. By satisfying this condition, it becomes possible to attain preferable recording and reproducing characteristics in the first information layer and the second information layer. Further, the width of the grooves formed in the first information layer and the second information layer is 0.3 $\mu$m or less from the viewpoint of high density recording. In the case where the slot is thin as mentioned above, the effect of an embodiment of the present invention becomes obvious. Furthermore, the track pitch in the first and second grooves is 0.45 $\mu$m or less.

Moreover, it is desirable that the reflectance from the first information layer and the second information layer to the laser beam for recording and reproducing is 3% or more and 10% or less. If the reflected light amount is small, the SN ratio becomes in short at the recording and reproducing apparatus side, and thus in some embodiments, a reflectance of 3% or more is necessary. However, when the reflectance is high, the light amount that the recording film absorbs decreases, and the recording sensitivity declines. In order to make it possible to record information to two information layers with the same light amount, it is in certain embodiments necessary to set the reflectance to 10% or less in an optical disk having the transmittance of the first information layer of 40 to 55%. Further, the difference between the reflectance of the reproducing layer and that of the non-reproducing layer increases, the leakage entrance of signals from the layer with the high reflectance to the layer with the low reflectance becomes large. For this reason, it is desirable that the difference between the reflectances from the two information layers is ±20% or less.

With regard to a recording and reproducing apparatus that records and reproduces information to and from the two-later recordable disk according to an embodiment of the invention, there are required, in addition to the current recording and reproducing apparatus, a mechanism for identifying how many layers an inserted optical disk has, a mechanism for focusing on each layer, and a mechanism for performing recording and reproduction to each information recording layer focused. Further, in some cases, a mechanism for performing spherical aberration to an optical system according to conditions is also required.

By use of the disk structure, the disk manufacturing method and materials, and the recording and reproducing apparatus mentioned above, it is possible to attain preferable reproduce signal quality and environment durability from two information layers in a recordable two-layer disk, thereby improving the recording capacity.

Test data for leading to various conditions of first embodiment

First test data

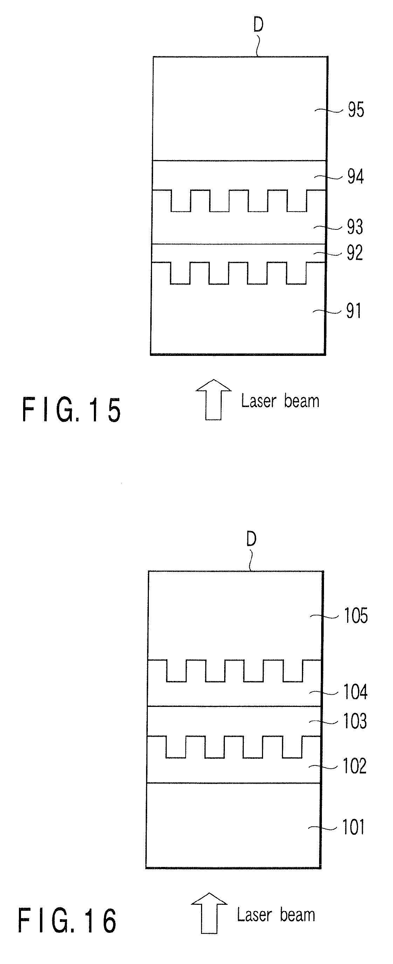

Test data according to an embodiment of the invention will be described hereinafter. By use of a polycarbonate substrate of 590 $\mu$m in thickness, a two-layer recordable disk was manufactured, and recording and reproducing evaluations were made. The structure of the disk was transparent substrate/recording film/refection film/adhesive film/recording film/reflection film/substrate. An organic dye material having the absorption maximum at the longer wavelength side than 405 nm as the wavelength of laser beam for recording and reproducing was used for the recording film, and Ag alloy was used for the reflection film. Note that the first information layer was configured to have a light transmittance of 45% at a wavelength of 405 nm. Further, with regard to a groove of each information layer, as shown in FIG. 15, a first information layer 92 is formed in a transparent substrate 91, and a second information layer 94 is formed in an adhesive layer 93. With regard to the depth of the formed groove, the second information layer depth H2 was set 50 nm, and the first information layer depth H1 was made such that H1/H2 became from 0.85 to 1.1, so that the disk was manufactured and evaluated. The width of the groove is 0.2 $\mu$m, and the thickness of the adhesive layer is 25 $\mu$m.

Information was recorded and reproduced to and from the above two-layer recordable disk by use of an optical head with wavelength of 405 nm and NA of 0.65. The disk was turned at a linear velocity of 6.6 m/s, the clock frequency was set 64.8 MHz, signals from 2T to 11T were recorded at random, and the fluctuation width and SbER of the signals were measured. The signal fluctuation width fluctuates at a frequency where there are recording and reproducing signals of the reproducing layer owing to the influence of the leakage entrance of signals from the non-reproducing layer. However, the fluctuation width is preferably small because it affects greatly upon reproducing characteristics.

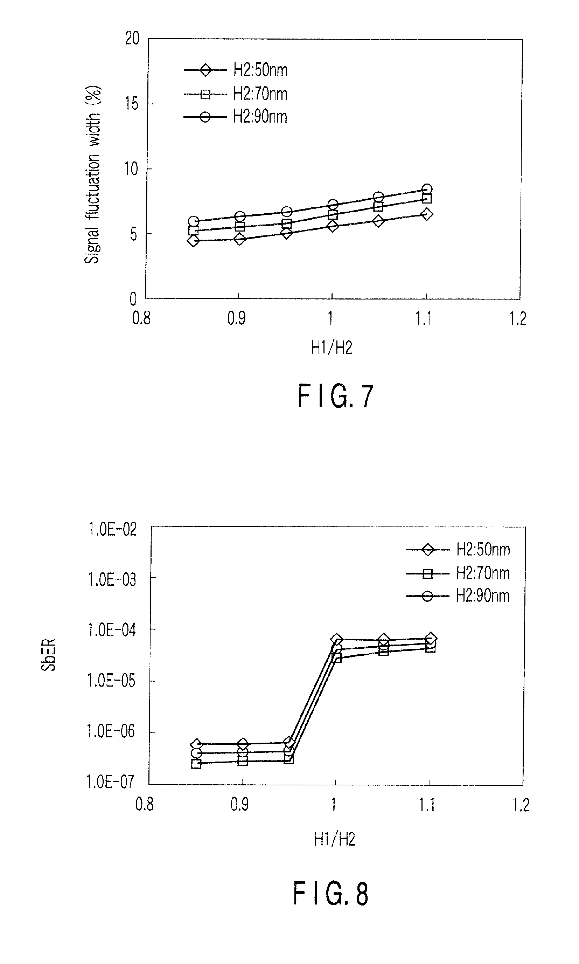

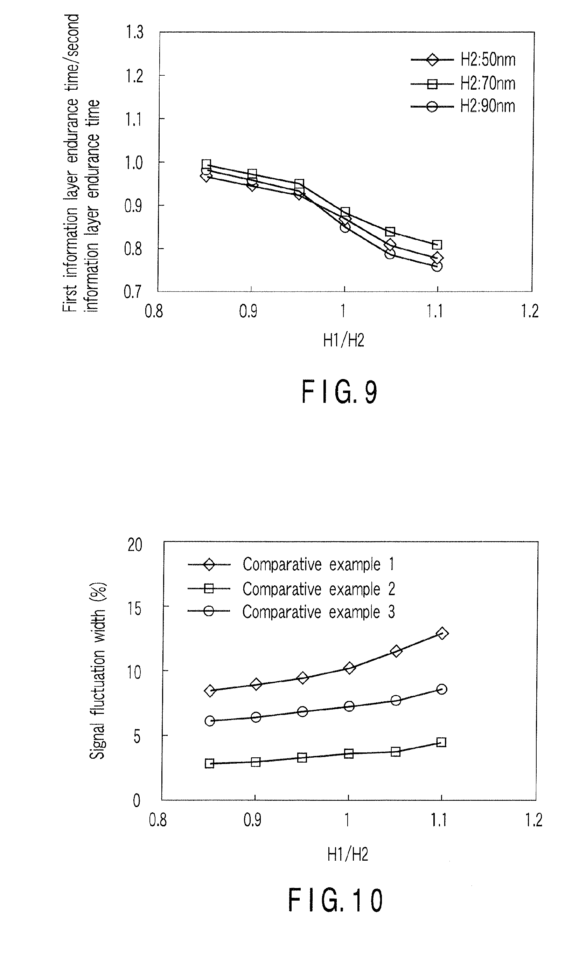

FIG. 7 shows the signal fluctuation width in the recording and reproducing signals of the first information layer. The signal fluctuation width shown herein is a rate (%) of the fluctuation amplitude to the signal amplitude. The signal fluctuation width slightly decreases as H1/H2 declines. FIG. 8 shows the result of SbER as the recording and reproducing characteristics at the time. It is confirmed that there was no significant change in the signal fluctuation width, but SbER was improved greatly at H1 < H2 < 1.0. This is because the recording and reproducing signals are greatly affected even when the signal fluctuation width is small, but in the evaluation by SbER, the influence is small when the signal fluctuation width is extremely small. FIG. 9 shows the relation between endurance time of the first information layer and endurance time of the second information layer in this disk. The endurance time herein means the time in the case when a recorded mark is accelerated under the condition of 85°C and 85%. It is ideal that the endurance time of the first information layer is substantially equal to the endurance time of the second information layer. However, if the difference is $\pm$10%, there is no practical problem. In other words, the condition of $0.9 \leq$ (first information layer endurance time)/(second information layer endurance time) $\leq 1.1$ is desirable, but this condition is satisfied at H1/H2 < 1.0. In order to secure the optical transmittance, it is necessary to make the recording film thin in the first information layer. However, by controlling H1 and H2, the organic dye material is applied flat and uniform, and it is possible to make the durability at high temperature and high humidity same as that of the information recording layer arranged at the depth.

Second test data

In the first test data, the second information layer depth H2 was set 70 nm, and the first information layer depth H1 was made such that H1/H2 became from 0.85 to 1.1, so that the disk was manufactured, and the recording reproducing characteristics and environment durability were evaluated. In the same manner as in the first test data, as shown in FIGS. 8 and 9, excellent SbER is obtained and equal endurance time is obtained in the first information layer and the second information layer at H1/H2 < 1.0.

Third test data

In the first test data, the second information layer depth H2 was set 90 m, and the first information layer depth H1 was made such that H1/H2 became from 0.85 to 1.1, so that the disk was manufactured, and the recording reproducing characteristics and environment durability were evaluated. In the same manner as in the first test data, as shown in FIGS. 8 and 9, excellent SbER is obtained and equal endurance time is obtained in the first information layer and the second information layer at H1/H2 < 1.0.

Comparative example 1

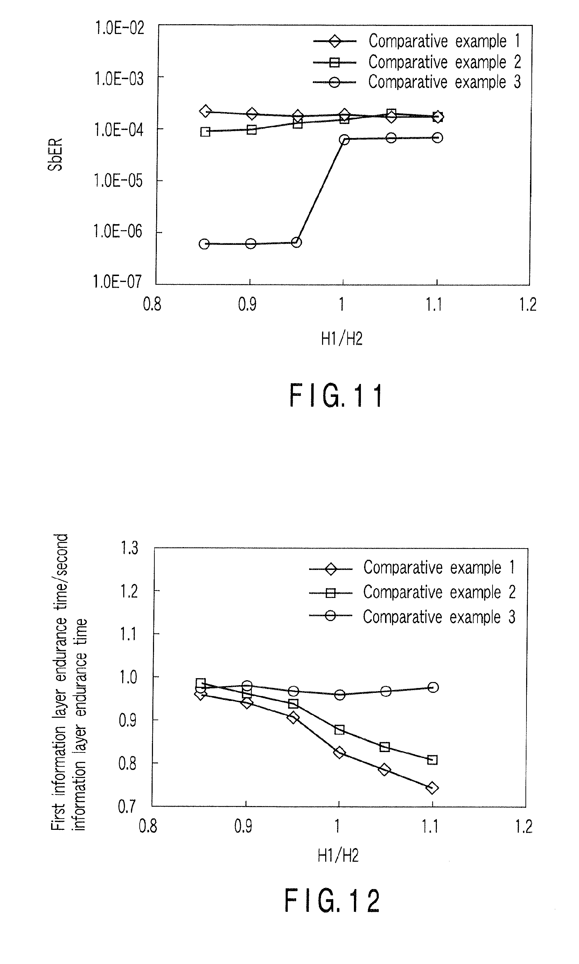

In the first test data, the recording reproducing characteristics and environment durability when the thickness of the adhesive layer was set 15 $\mu$m were evaluated. Because the adhesive layer is thin, the leakage entrance of signals from the non-reproducing layer becomes large by around 10% irrespective of H1/H2 as shown in FIG. 10. Accordingly, as shown in FIG. 11, SbER was around 1.0E-4 irrespective of H1/H2. FIG. 12 shows the result of the endurance time. There is no influence of the thickness of the adhesive layer, and equal endurance time is obtained in the first information layer and the second information layer at H1/H2 < 1.0.

Comparative Example 2

In the first test data, the recording reproducing characteristics and environment durability when the thickness of the adhesive layer was set 45 μm were evaluated. Because the adhesive layer is thick, the leakage entrance of signals from the non-reproducing layer is small as shown in FIG. 10. However, under the influence of spherical aberration, the recording and reproducing characteristics decline as shown in FIG. 11. FIG. 12 shows the result of the endurance time. There is no influence of the thickness of the adhesive layer, and equal endurance time is obtained in the first information layer and the second information layer at H1/H2 < 1.0.

Comparative Example 3

In the first test data, when the groove depth is 0.5 μm, the same tendency as in the first test data can be confirmed as shown in FIGS. 10 and 11. Further, because the groove width is wide, equal endurance time is obtained in the first information layer and the second information layer irrespective of H1/H2 as shown in FIG. 12.

Second embodiment

A second embodiment specifies that a groove of a first information layer 22 is provided in a transparent substrate 71, and that a groove of a second information layer 74 is provided in a substrate 75. Herein, no groove is provided in an adhesive layer 73.

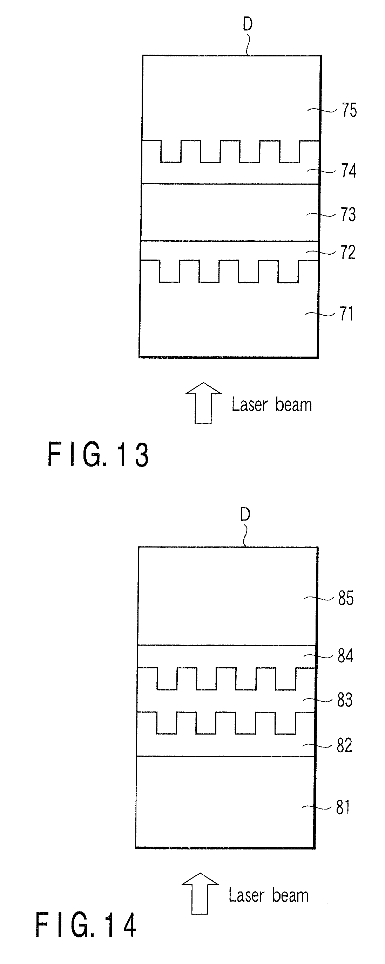

More specifically, the grooves provided in the first information layer 12 and the second information layer 14 in FIG. 1 are formed in the transparent substrate 71 and the substrate 75, respectively, as shown in FIG. 13. In this embodiment, the recording and reproducing characteristics of the above-described first to third test data and Comparative examples 1 and 2 are obtained.

Further, with regard to the grooves formed in the first and second information layers, it is possible to perform recording to only the groove closer to the laser beam incidence side. Furthermore, with regard to the grooves formed in the first and second information layers, it is possible to perform recording to only the groove farther from the laser beam incidence side. In the same manner, it is preferable to perform recording to both the grooves of the grooves formed in the first and second information layers.

Third embodiment

A third embodiment specifies that a groove of a first information layer 82 is provided in an adhesive layer 83, and that a groove of a second information layer 84 is provided also in the adhesive layer 83. Herein, no groove is provided in a transparent substrate 81 and a substrate 85.

More specifically, the grooves arranged in the first information layer 12 and the second information layer 14 in FIG. 1 are formed in the adhesive layer 83 as shown in FIG. 14. In some cases, the adhesive layer 83 may be of multi layers made of plural materials. In this embodiment as well, the recording and reproducing characteristics of the above-described first to third test data and Comparative examples 1 and 2 have been obtained.

Further, with regard to the grooves formed in the first and second information layers, it is possible to perform recording to only the groove closer to the laser beam incidence side. Furthermore, with regard to the grooves formed in the first and second information layers, it is possible to perform recording to only the groove farther from the laser beam incidence side. In the same manner, it is preferable to perform recording to both the grooves of the grooves formed in the first and second information layers.

Fourth embodiment

A fourth embodiment specifies that a groove of a first information layer 92 is provided in a substrate 91, and that a groove of a second information layer 94 is provided also in an adhesive layer 93. Herein, no groove is provided in a substrate 95.

More specifically, the groove provided in the first information layer 12 in FIG. 1 is formed in the transparent substrate 91, and the groove provided in the second information layer 14 is formed in the adhesive layer 93 as shown in FIG. 15. In some cases, the adhesive layer 93 may be of multi layers made of plural materials. In this embodiment as well, the recording and reproducing characteristics of the above-described first to third test data and Comparative example 1, 2 are obtained.

Further, with regard to the grooves formed in the first and second information layers, it is possible to perform recording to only the groove closer to the laser beam incidence side. Furthermore, with regard to the grooves formed in the first and second information layers, it is possible to perform recording to only the groove farther from the laser beam incidence side. In the same manner, it is preferable to perform recording to both the grooves of the grooves formed in the first and second information layers.

Fifth embodiment

A fifth embodiment specifies that a groove of a first information layer 102 is provided in an adhesive layer 103, and that a groove of a second information layer 104 is provided in a substrate 105. Herein, no groove is provided in a transparent substrate 101.

More specifically, the groove provided in the first information layer 12 in FIG. 1 is formed in the adhesive layer 103 as shown in FIG. 16, and the groove provided in the second information layer 104 is formed in the substrate 105. In some cases, the adhesive layer 103 may be of multi layers made of plural materials. In this embodiment as well, the recording and reproducing characteristics of the above-described first to third test data and Comparative examples 1 and 2 are obtained.

Further, with regard to the grooves formed in the first and second information layers, it is possible to perform recording to only the groove closer to the laser beam incidence side. Furthermore, with regard to the grooves formed in the first and second information layers, it is possible to perform recording to only the groove farther from the laser beam incidence side. In the same manner, it is preferable to perform recording to both the grooves of the grooves formed in the first and second information layers.

Sixth embodiment

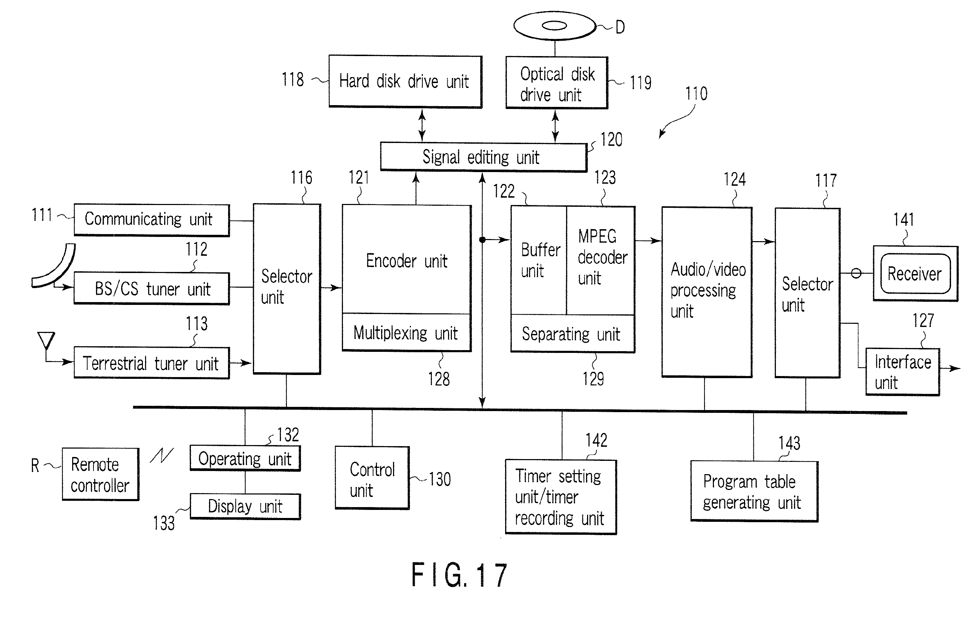

A sixth embodiment specifies an example of an optical disk apparatus that performs the recording and reproducing process on the above-described two-layer recordable optical disk. FIG. 17 is a block diagram showing an example of an optical disk apparatus that handles a two-layer recordable optical disk according to an embodiment of the present invention.

As an optical disk apparatus 110, a digital television having a recording function with a tuner, etc. as a source is shown as an example. Further, it is preferable that the optical disk apparatus 110 is a hard disk recorder having a tuner, etc. and a recording function.

Accordingly, in the description of the embodiment with reference to FIG. 17 hereinafter, explanation is made in detail as a digital television having a recording function. However, by separating a display 126 from FIG. 17, the explanation may be interpreted as the explanation of a hard disk recorder having the same function.

In FIG. 17, the optical disk apparatus 110 as a digital television has two kinds of disk drives. Namely, the optical disk apparatus 110 has a hard disk drive unit 118 and an optical disk drive unit 119. The hard disk drive unit 118 drives a hard disk H as a first medium. The optical disk drive unit 119 turns and drives an optical disk D as an information recording medium that can configure video files as a second medium, and performs reading/writing of information. Further, a control unit 130 is connected via a data bus B to each unit so as to control the entire operation. However, in the embodiment of the present invention, the optical disk drive unit 119 is not always a necessary component.

The optical disk apparatus 110 in FIG. 17 has an encoder unit 21 that configures the recording side, an MPEG decoder unit 123 that configures the reproducing side, and the control unit 130 that controls the operation of the apparatus main body as the main components thereof. The optical disk apparatus 110 has a selector 116 at the input side and a selector 117 at the output side. To the selector 116 at the input side, a communicating unit 111 such as a LAN, a so-called satellite broadcasting (BS/CS) digital tuner unit 112, and a so-called terrestrial digital/analog tuner unit 113 are connected, and signals are output to the encoder unit 21. Further, a satellite antenna is connected to the BS/CS digital tuner unit 112, and a terrestrial antenna is connected to the terrestrial digital/ analog tuner unit 113. Furthermore, the optical disk apparatus 110 has an encoder unit 121, a signal editing unit 120 that receives the output of the encoder unit 121 and performs a desired data processing such as data editing, and the hard disk drive unit 118 and the optical disk drive unit 119 which are connected to the signal editing unit 120. The optical disk apparatus 110 also has the MPEG decoder unit 123 that receives and decodes signals from the hard disk drive unit 118 and the optical disk drive unit 119, the encoder unit 121, a buffer unit 122, the MPEG decoder unit 123, a multiplexing unit 128, a separating unit 129, the control unit 130, a timer setting unit/timer recording unit 142, and a program table generating unit 143. These units are connected to the control unit 130 via the data bus B. Further, the output of the selector unit 117 is supplied to a display 126, or supplied to an external device via an interface unit 127 that performs communications with external devices.

Moreover, the optical disk apparatus 110 has an operating unit 132 that is connected to the control unit 130 via the data bus B, and that receives user's operations and operations of a remote controller R. Herein, the remote controller R enables substantially the same operations as those by the operating unit 132 provided at the main body of the optical disk apparatus 110. The remote controller R can make the recording and reproducing instructions to the hard disk drive unit 118 and the optical disk drive unit 119, editing instructions, and various settings such as tuner operations, and timer recording settings.

Basic Operation

Recording Process

Next, the operation at recording, including other embodiments, will be described in detail hereinafter. As the input side of the optical disk apparatus 110, the communicating unit 111 such as LAN is connected with an external device, communicates with a program information providing server and the like via a communication path such as Internet via, for example, a modem, and downloads broadcasting contents and the like. Further, the BS/CS digital tuner unit 112 and the terrestrial digital/analog tuner unit 113 select broadcasting signals via antennas to demodulate the signals, and receive video signals and audio signals. The tuner units correspond to various kinds of broadcasting signals. Examples thereof include terrestrial analog broadcasting, terrestrial waves, digital broadcasting, BS analog broadcasting, BS digital broadcasting, and CS digital broadcasting, but the present invention is not limited thereto. In addition, the present invention is not limited to the arrangement of only one tuner, but it includes the case where two or three terrestrial broadcasting tuner units and BS/CS tuner units are arranged, and they are operated in parallel according to the requests for timer recording operations.

The above communicating unit 111 may be an IEEE1394 interface, and can receive digital contents from an external device on the network. The communicating unit 111 can also receive brightness signals, color difference signals, video signals of composites, and audio signals from an input terminal (not shown). The input of the signals is controlled by the selector 116 controlled by the control unit 130 and the like, and selectively supplied to the encoder unit 121.

The encoder unit 121 has analog and digital converters for video and audio for digitalizing analog video signals and analog audio signals input by the selector 116, a video encoder, and an audio encoder. Further it includes a sub-picture encoder. The output of the encoder unit 121 is converted into a predetermined compression format such as MPEG, and supplied to the above control unit 130.

Further, the BS/CS digital tuner 112 and the like are not necessarily built in. It is preferable that they are arranged externally via data input terminals, and supply received digital signals via the selector unit 16 to the encoder unit 121 and the control unit 130.

Herein, the apparatus in FIG. 17 can supply information encoded by the encoder unit 121 (packs of video, audio, sub-picture data and the like) and created management information via the control unit 130 to the hard disk drive unit 118 or the optical disk drive unit 119, and record them into the hard disk drive unit 118 or the optical disk D. Further, the apparatus can record information recorded in the hard disk drive unit 118 or the optical disk D via the control unit 130 and the optical disk drive unit 119 to the optical disk D and the hard disk drive unit 118.

It is possible to perform the editing process including deleting a part of video objects of plural programs recorded in the hard disk drive unit 118 and the optical disk D, jointing objects of different programs, and the like.

Reproducing Process and the like

Next, the process of reproducing mainly recorded information, including other embodiments, will be described in detail hereinafter. The MPEG decoder unit 123 has a video processor that appropriately combines decoded main picture with decoded sub-picture, and outputs menus, highlight buttons, superimposed subtitles and other sub-pictures on the main picture.

Output audio signals of the MPEG decoder unit 123 are analog converted via the selector unit 117 by a digital/analog converter (not shown) and supplied to a speaker, or supplied via the I/F unit 27 to an external device. The selector unit 117 is controlled by select signals from the control unit 130. Consequently, when directly monitoring digital signals from the respective tuner units 12 and 13, the selector unit 177 can directly select signals having passed through the encoder unit 121.

The optical disk apparatus 110 of the embodiment has such a comprehensive function, and performs the recording and reproducing process to a plural of sources by the optical disk D or the hard disk drive unit 118.

Seventh embodiment:

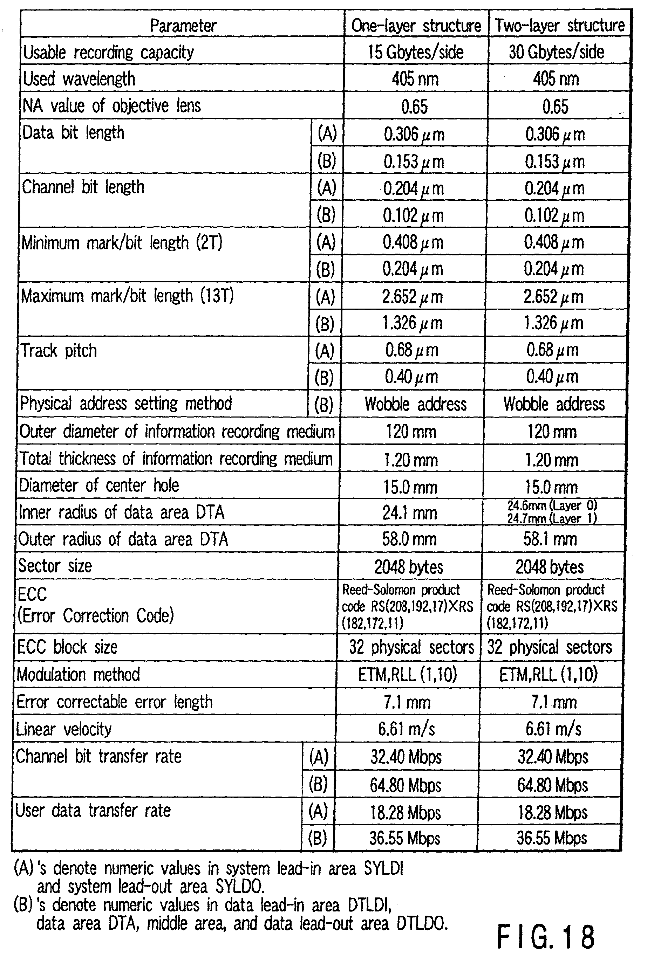

A seventh embodiment specifies in detail an example of the standard of a two-layer optical disk as the above-described HD DVD. FIG. 18 is an explanatory view showing a general parameter setting example of a two-layer recordable optical disk according to an embodiment of the present invention.

Parameters of two-layer optical disk

Parameters of the two-layer optical disk according to the present invention will be described with reference to FIG. 18 hereinafter. With regard to the two-layer optical disk of the invention, as shown in FIG. 18, the usable recording capacity is 15 Gbytes in a one-layer structure, and 30 Gbytes in a two-layer structure.

In the same manner, with regard to the one-layer structure and the two-layer structure, used wavelengths, NA values of objective lens are shown. Further, as (A) numeric values in a system lead-in area and a system lead-out area, and furthermore, as (B) numeric values in the data lead-in area, a data area, a middle area and the data lead-out area, values of data bit length, channel bit length, minimum mark/pit length (2T), maximum mark/pit length (13T), track pitch, and physical address setting method are shown with regard to the one-layer structure and the two-layer structure.

Further, with regard to the one-layer structure and the two-layer structure, there are shown the outer diameter of an information recording medium, the total thickness of the information recording medium, the diameter of a center hole, the inner radius of a data area DTA, the outer radius of the data area DTA, sector size, ECC, ECC block size, modulation method, error correctable error length, and linear velocity.

Furthermore, with regard to the one-layer structure and the two-layer structure, as (A) numeric values in the system lead-in area and the system lead-out area, and further, as (B) numeric values in the data lead-in area, data area, middle area, and data lead-out area, the channel bit transfer rate, and user data transfer rate are shown.

Wobble structure of two-layer optical disk

Next, with regard to the HD DVD as the two-layer optical disk according to the present invention, the characteristics, especially on the wobble structure thereof, will be described in detail with reference to the accompanying drawings.

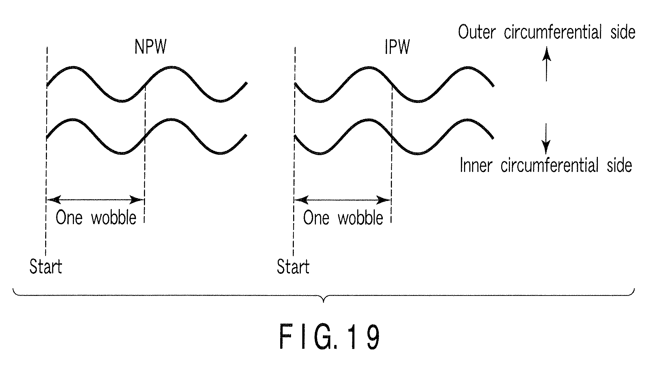

A bit address allotment method in the two-layer optical disk according to the embodiment is shown in FIG. 19. As shown in the left side in FIG. 19, a wobble pattern that snakes from a start position of one wobble first to the outer circumferential side is called NPW (Normal Phase Wobble), and data of "0" is allotted thereto. As shown in the right side in FIG. 19, a wobble pattern that snakes from the start position of one wobble first to the inner circumferential side is called IPW (Invert Phase Wobble), and data of "1" is allotted thereto.

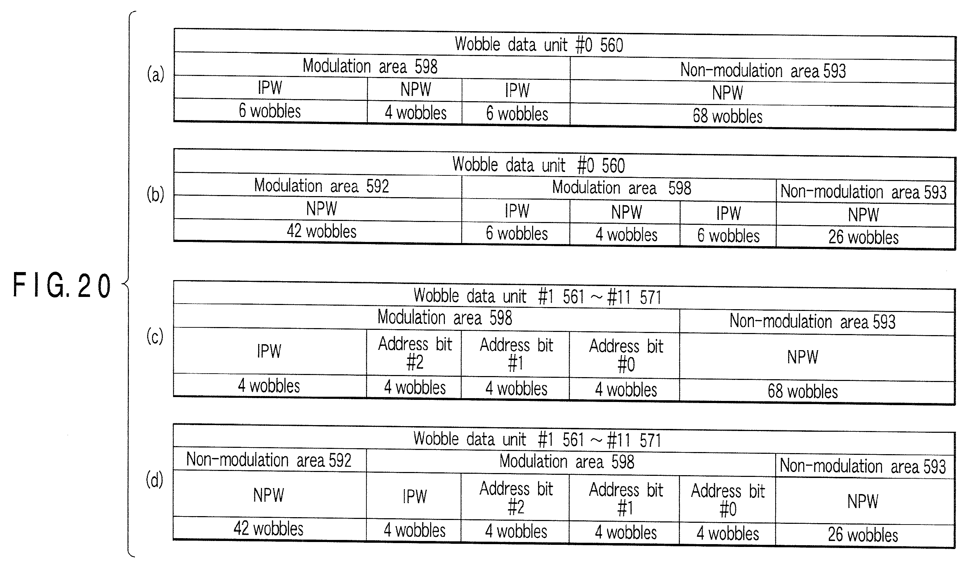

As shown in FIG. 20, the contents of the respective wobble data units #0560 to #11571 each are configured of a modulation area 598 for 16 wobbles and non-modulation areas 592 and 593 for 68 wobbles. The present embodiment has a great characteristic in that the occupation ratio of the non-modulation areas 592 and 593 to the modulation area is set large sufficiently. In the non-modulation areas 592 and 593, a groove area or a land area always wobble at a constant frequency. Accordingly, it is possible to make a PLL (Phase Locked Loop) by use of the non-modulation areas 592 and 593, and stably extract (generate) a standard clock to be used for reproducing a record mark recorded in an information recording medium or a recording standard clock to be used for newly recording a mark.

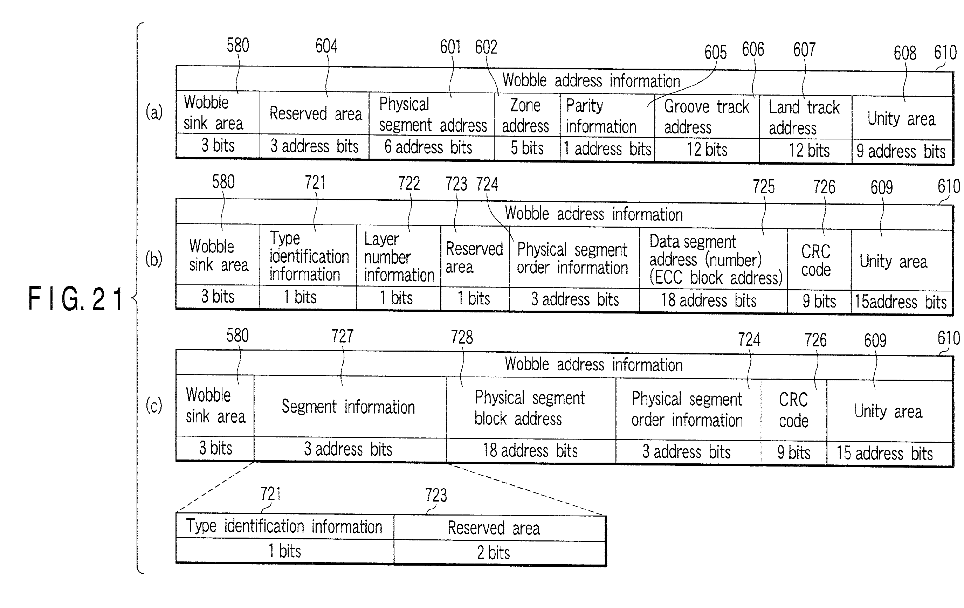

At transfer from the non-modulation areas 592 and 593 to the modulation area 598, the IPW area as a modulation start mark is set by use of 4 wobbles or 6 wobbles. At the wobble data portion shown in (c) and (d) of FIG. 20, arrangement is made such that the wobble-modulated wobble address areas (address bits #2 to #0) come just after the IPW area as this modulation start mark is detected. (a) and (b) of FIG. 20 show the contents in the wobble data unit #0560 corresponding to the wobble sink area 580 shown in (c) of FIG. 21 to be described later, and (c) and (d) of FIG. 20 show the contents of the wobble data unit corresponding to the wobble data portion from segment information 727 to CRC code 726 in (c) of FIG. 21. (a) and (c) of FIG. 20 show contents of a wobble data unit corresponding to a primary position 701 of the modulation area to be described later, and (b) and (d) of FIG. 20 show contents of a wobble data unit corresponding to a secondary position 702 of the modulation area. As shown in (a) and (b) of FIG. 20, in the wobble sink area 580, 6 wobbles are allotted to the IPW area, and 4 wobbles are allotted to the NPW area surrounded by the IPW area. As shown in (c) and (d) of FIG. 20, in the wobble data portion, 4 wobbles are allotted to the IPW area and all the address bit areas #2 to #0.

FIG. 21 shows an embodiment of the data structure in wobble address information in a recordable information recording medium. For comparison, the data structure in wobble address information in a rewritable information recording medium is shown in (a) of FIG. 21. Two embodiments of the data structure in wobble address information in the recordable information recording medium are shown in (b) and (c) of FIG. 21.

In a wobble address area 610, 3 address bits are set by 12 wobbles. Namely, continuous four wobbles configure one address bit. In this manner, the present embodiment has a structure in which address information is distributed and arranged every three address bits. When wobble address information 610 is recorded intensively in one portion in an information recording medium, it becomes difficult to detect all the information if dust or damage occurs on the surface of the medium. In the embodiment, the wobble address information 610 is distributed and arranged every three address bits (12 wobbles) included in one of the wobble data units 560 to 576, and collected information is recorded every an integer multiple address bit of three address bit. Consequently, even when it is difficult to detect information at one portion owing to dust or damage, other information can be detected.

The wobble address information 610 is distributed and arranged and the wobble address information 610 is arranged so as to complete per one physical segment as mentioned above, whereby address information can be known per physical segment. As a consequence, when an information recording and reproducing apparatus accesses, the current position can be known in unit of physical segment.

By adopting the NRZ method as an embodiment, the phase does not change in continuous four wobbles in the wobble address area 610. By use of this characteristic, the wobble sink area 580 is set. Namely, a wobble pattern that cannot occur in the wobble address information 610 is set to the wobble sink area 580, so that it is made easy to identify the arrangement position of the wobble sink area 580. The present embodiment is characterized in that, with respect to the wobble address areas 586 and 587 where four wobbles configure one address bit, one address bit length is set to the length other than that of four wobbles in the wobble sink area 580 position. More specifically, in the wobble sink area 580, a wobble pattern change that cannot occur in the wobble data portion as shown in (c) and (d) of FIG. 20 is set to the area (IPW area) where wobble bit becomes "1" as shown in (a) and (b) of FIG. 20. In the wobble pattern change, "six wobbles → four wobbles → six wobbles" different from four wobbles is set. When the method for changing wobble cycles as mentioned above is used as a concrete method for setting a wobble pattern that cannot occur in the wobble data portion to the wobble sink area 580, the following advantages are obtained.

　　1) It is possible to continue a wobble detection (determination of wobble signals) stably without breakage of PLL concerning the wobble slot position performed in the wobble signal detecting unit.

　　2) It is possible to easily detect the wobble sink area 580 and the modulation start marks 561 and 582 by displacement of the address bit border position performed in the wobble signal detecting unit. The present embodiment is characterized in that the wobble sink area 580 is formed by 12-wobble cycle, and that the length of the wobble sink area 580 is made same as the length of three address bits. Consequently, by allotting all the modulation areas (for 16 wobbles) in one wobble data unit #0560 to the wobble sink area 580, the detection easiness of the start position of the wobble address information 610 (arrangement position of the wobble sink area 580) is improved. This wobble sink area 580 is arranged in the first wobble data unit in the physical segment. By arranging the wobble sink area 580 at the head position in the physical segment, it is possible to extract the border position of physical segments easily only by detecting the position of the wobble sink area 580.

As shown in (c) and (d) of FIG. 20, prior to the address bits "#2 to #0, the IPW area as the modulation start mark is arranged at the head position in the wobble data units #1561 to #11571. In the non-modulation areas 592 and 593 arranged at the position ahead thereof, the NPW waveform continues. Accordingly, at the wobble signal detecting unit, the change from NPW to IPW is detected, and the position of the modulation start mark is extracted.

For reference, as the contents of the wobble address information 610 in the rewritable information recording medium shown in (a) of FIG. 21, the followings are recorded.

1) Physical segment address 601

This is information showing a physical segment number in a track (in one round in an information recording medium 221).

2) Zone address 602

This shows a zone number in the information recording medium 221.

3) Parity information 605

This is information set for error detection at reproduction from the wobble address information 610. The information adds 14 address bits from timer information 604 to the zone address 602 individually in unit of address bit, and displays whether the addition result is an even number or an odd number. A value of the parity information 605 is set such that the result of taking an exclusive OR in unit of address bit with respect to the total 15 address bits including one address bit of the address parity information 605 becomes "1".

4) Unity area 608

As mentioned above, the contents in each wobble data unit are set to be configured by the modulation area 598 for 16 wobbles and the non-modulation areas 592 and 593 for 68 wobbles, and the occupation ratio of the non-modulation areas 592 and 593 to the modulation area 598 is made large sufficiently. Further, the occupation ratio of the non-modulation areas 592 and 593 is widened, and the precision and stability of extraction (generation) of a reproducing standard clock or recording standard clock are further improved. In the unity area 608, all the NPW areas are continuous, which becomes a non-modulation area of uniform phase.

The numbers of address bits allotted to the above respective information are shown in (a) of FIG. 21. As mentioned above, the contents of the wobble address information 610 are separated every three address bits, and distributed and arranged in each wobble data unit. Even when a burst error occurs owing to dust or damage on the surface of the information recording medium, the possibility that the error may spread over different wobble data units is extremely low. Accordingly, the number of times of going over different wobble data units as place to which same information is recorded is reduced as much as possible, and the cut lines of the respective information and the border positions of wobble data units are made to be matched with each other. Consequently, even if a burst error occurs owing to dust or damage on the surface of the information recording medium and specific information cannot be read, other information recorded in other wobble data units can be read, which improves the reproducing reliability of wobble address information.

As shown in (b) and (c) of FIG. 21, also in a recordable information recording medium, a wobble sink area 680 is arranged at the head position of a physical segment in the same manner as in a rewritable information recording medium, whereby it is made easy to detect the head position of a physical segment or the border position between adjacent physical segments. In type identification information 721 of the physical segment shown in (b) of FIG. 21, in the same manner as in the wobble sink pattern in the above wobble sink area 580, the arrangement position of a modulation area in a physical segment is indicated, so that the arrangement place of the other modulation area 598 in the same physical segment can be forecasted beforehand. Accordingly, advance preparation of detection of the next coming modulation area can be made, which makes it possible to increase the precision of signal detection (judgment) in the modulation area.

Layer number information 722 in the recordable information recording medium shown in (b) of FIG. 21 shows whether the recording layer of one-side single recording layer or that of one-side double recording layer is shown, and

- if it is "0", it means one-side single recording layer medium or "L0 layer" in the case of one-side double recording layer (front layer at the laser beam incidence side), and
- if it is "1", it means "L1 layer" of one-side double recording layer (rear layer at the laser beam incidence side).

Physical segment order information 724 shows the arrangement sequence of relative physical segments in a same physical segment block. As is apparent in comparison with (a) of FIG. 21, the head position of the physical segment order information 724 in the wobble address information 610 is matched the head position of the physical segment address 601 in the rewritable information recording medium. By setting the physical segment order information position to the rewritable type, it is possible to increase compatibility between media types. In addition, by sharing an address detection control program using wobble signals in an information recording and reproducing apparatus that can use both a rewritable information recording medium and a recordable information recording medium, simplification can be made.

A data segment address 725 in (b) of FIG. 21 describes address information of a data segment by number. As explained already, one ECC block is configured by 32 sectors in the present embodiment. Accordingly, low five bits of a physical sector number of a sector arranged at the head in a specified ECC block coincide with a sector number of a sector arranged at the head position in the adjacent ECC block. When a physical sector number is set such that low five bits of a physical sector number of a sector arranged at the head in an ECC block become "00000", values of the low sixth bit and above of the physical sector number of all the sectors existing in the same ECC block coincide with each other. Accordingly, address information where data of the low five bits of the physical sector number of the sectors existing in the same ECC block is removed, and only data of the low sixth bit and above is extracted is made as an ECC block address (or ECC block address number). The data segment address 725 prerecorded by wobble modulation (or physical segment block number information) coincides with the above ECC block address. For this reason, when position information of the physical segment block by wobble modulation is displayed by the data segment address, a data amount decreases every five bits in comparison with the display by the physical sector number, and the current position detection at access becomes simple.

The CRC code 726 in (b) and (c) of FIG. 21 is a CRC code (error correction code) with respect to 24 address bits from the type identification information 721 to the data segment address 725 of the physical segment, or a CRC code with respect to 24 address bits from the segment information 727 to the physical segment order information 724. Even if wobble modulation signals are partially read mistakenly, they can be corrected partially by the CRC code 726.

In the recordable information recording medium, the area equivalent to remaining 15 address bits is allotted to a unity area 609, and the contents of five wobble data units from the 12th to the 16th are all NPW (namely, there is no modulation area 598).

A physical segment block address 728 in (c) of FIG. 21 is an address that is set for each physical segment block where seven physical segments configure one unit, and sets a physical segment block address with respect to a first physical segment block in a data lead-in DTRDI to "1358h". From the first physical segment block in the data lead-in DTLDI to a last physical segment block in a data lead-out DTLDO, including data area DTA, the value of the physical segment block address is incremented by one sequentially.

The physical segment order information 724 shows the order of respective physical segments in one physical segment block, and "0" is set to the first physical segment, and "6" is set to the last physical segment.

The embodiment shown in (c) of FIG. 21 is characterized in that the physical segment block address 728 is arranged at the position prior to the physical segment order information 724. For example, like RMD field 1 shown in Table 18, address information is often managed by the physical segment block address. In the case of accessing a predetermined physical segment block address according to the management information, the wobble signal detecting unit first detects the place of the wobble sink area 580 shown in (c) of FIG. 21, and then, sequentially interprets information from the information recorded just after the wobble sink area 580. When there is a physical segment block address at the position prior to the physical segment order information 724, the physical segment block address is first interpreted, so that it is possible to determine whether it is a predetermined physical segment block address or not without interpreting the physical segment order information 724. As a consequence, accessibility by use of a wobble address is improved.

The contents of the segment information 727 are configured by type identification information 721 and a reserved area 723.

Also in (c) of FIG. 21, the present embodiment is characterized in that the type identification information 721 is arranged just after the wobble sink area 580. As described above, in the wobble signal detecting unit (not shown), the place of the wobble sink area 580 shown in (c) of FIG. 21 is first detected, and then, information is interpreted sequentially from the information recorded just after the wobble sink area 580. Accordingly, by arranging the type identification information 721 just after the wobble sink area 580, the arrangement place of the modulation area in the physical segment can be confirmed instantaneously, and thus, high speed access process by use of a wobble address can be realized.

Method of measuring wobble detection signal

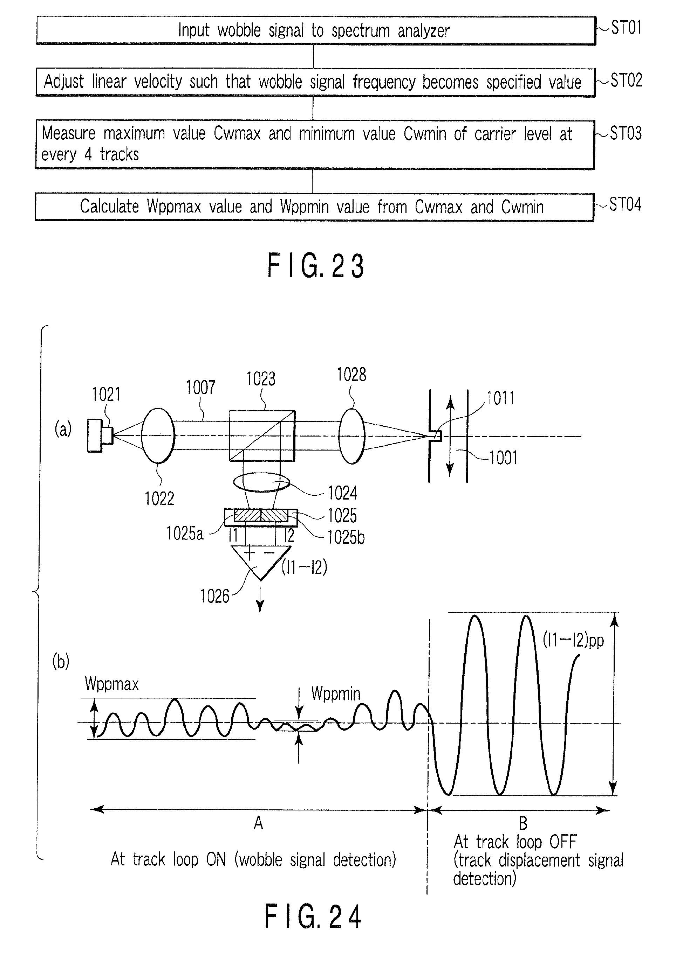

In order to regulate the reproducing signal quality so as to control a cross talk amount of a wobble signal at a specific level or lower, a method of measuring a maximum amplitude (Wppmax) and a minimum amplitude (Wppmin) of a wobble detection signal will be described with reference to the flowchart in FIG. 23. Since the following flowchart can be made of circuit blocks, each step of the flowchart can be defined as a block. As shown in step ST01, a wobble signal is input to a spectrum analyzer. Herein, parameters of the spectrum analyzer are set as shown as follows.

| | |
|---|---|
| Central frequency | 697 kHz |
| Frequency span | 0 Hz |
| Resolution band widows | 10 kHz |
| Video band widows | 30 Hz |

Next, in step ST02, the rotation speed of the disk is changed such that the wobble signal frequency becomes a predetermined value, and the linear velocity is adjusted.

Since the H format is used in this embodiment, the predetermined value of the wobble signal frequency is set to 697 kHz.

Next, an example of the measurement of the maximum value (Cwmax) and the minimum value (Cwmin) of a carrier level of a wobble detection signal will be described.

Since a constant linear velocity (CLV) recording method is used in the recordable storage memory of the embodiment, wobble phases between adjacent tracks change with a track position. If wobble phases between adjacent tracks are same, the carrier level of a wobble detection signal becomes highest, and it becomes the maximum value (Cwmax). When the wobble phases between adjacent tracks become reverse phases, the wobble detection signal becomes smallest under the influence of cross talk between adjacent tracks, and it becomes the minimum value (Cwmin). Accordingly, in the case of tracing along tracks from the inner circumference to the outer circumferential direction, the size of a carrier of a wobble detection signal detected fluctuates at 4-track cycle.

In the present embodiment, a wobble signal is detected at every 4 tracks, and the maximum value (Cwmax) and the minimum value (Cwmin) per 4 tracks are measured. In step ST03, the pair of the maximum value (Cwmax) and the minimum value (Cwmin) is accumulated as data of 30 pairs or more.

Next, by use of the following calculation equation, the maximum amplitude (Wppmax) and the minimum amplitude (Wppmin) are calculated from the average value of the maximum value (Cwmax) and the minimum value (Cwmin) in step ST04.

In the following equation, R represents a terminated resistance value of the spectrum analyzer. Hereinafter, the equation for converting Wppmax and Wppmin from the values of Cwmax and Cwmin will be explained.

In the dBm unit system, it is standard that 0 dBm = 1 mW. Therefore, a voltage amplitude Vo at which electric power Wa becomes 1 mW is calculated as follows.

$$
\begin{aligned}
Wao &\\
&= Ivo \\
&= Vo \times Vo/R \\
&= 1/1000W
\end{aligned}
$$

Wao
Accordingly,

$$
Vo = (R/1000)^{1/2}
$$

Is obtained.

Next, the relation between the wobble amplitude Wpp [V] and the carrier level Cw [dBm] observed by the spectrum analyzer becomes as follows. Herein, since Wpp is a sine wave, the amplitude is corrected into an effective value as follows.

$$
Wpp - rms = Wpp/(2 \times 2^{1/2})
$$

$$
Cw = 20 \times \log(Wpp - rms/Vo) \ [dBm]
$$

Accordingly,

$$
Cw = 10 \times \log(Wpp - rms/Vo)^2
$$

is obtained.

When the above log is converted, the following formulas are established.

$$
\begin{aligned}
(Wpp - rms/Vo)^2 &\\
&= 10^{(Cw/10)} \\
&= \{[Wpp/(2 \times 21/2)]/Vo\}2 \\
&= \{[Wpp/(2 \times 2^2)]/(R/1000)^{1/2}\}2 \\
&= (Wpp^2/8/(R/1000)
\end{aligned}
$$

$$
\begin{aligned}
WPP2^2 &\\
&= (8 \times R)/(1000 \times 10^{(Cw/10)}) \\
&= 8 \times R \times 10^{(-3)} \times 10^{(Cw/10)} \\
&= 8 \times R \times 10^{(Cw/10)(-3)}
\end{aligned}
$$

$$
Wpp = \{8 \times R \times 10^{(Cw/10)(-3)}\}1/2 \qquad (61)
$$

Now, the characteristics of a wobble signal and a track displacement detection signal are shown in FIG. 24.

A signal of (I1-I2) as the track displacement detection signal detected by the optical head shown in (a) of FIG. 24 is input to the wobble signal detecting unit (not shown).

The structure of the optical head existing in the information recording and reproducing unit will be described. As shown in (a) of FIG. 24, laser beam emitted from a semiconductor laser 1021 is made into parallel light by a collimator lens 1022, and the parallel light is focused by an objective lens 1028 via a beam splitter 1023, and radiated into a pre-groove area 1011 of an information recording medium 1001. The pre-groove area 1011 wobbles finely. The light reflected from the wobbled pre-groove area 1011 goes through the objective lens 1028 again, and is reflected by the beam splitter 1023 and radiated to a light detector 1025 by a condensing lens 1024.

The light detector 1025 is composed of a light detection cell 1025-1 and a light detection cell 1025-2. A difference between signals I1 and I2 detected from the respective light detection cells 1025-1 and 1025-2 is obtained, and this signal is input to the wobble signal detecting unit (not shown). The optical head shown in (a) of FIG. 24 can detect both the wobble signal and the track displacement detection signal of push-pull type.

Since a band of wobble frequency is higher than a tracking band when the track loop is ON, wobble signals are detected from the optical head. Herein, when wobble phases of pre-grooves between adjacent tracks are equal, the maximum amplitude Wppmax is obtained, and in the case of reverse phases, the wobble signal amplitude declines under the influence of cross talk of adjacent tracks, and the minimum amplitude Wppmin is obtained.

In the present embodiment, contrivance is made such that conditions between the maximum amplitude (Wppmax) and the minimum amplitude (Wppmin) are specified to achieve further more stable wobble detection. Namely, the wobble signal detecting unit is designed such that signals can be detected stably even when an amplitude value of a wobble detection signal changes up to three times. Further, it is desirable that, under the influence of cross talk, the change ratio of the amplitude of a wobble detection signal is 1/2 or less.

Accordingly, in the embodiment, an intermediate value thereof is taken, and a value obtained by dividing a maximum value of an allowable wobble signal by a minimum value of a wobble signal (Wppmax ÷ Wppmin) is set 2.3 or less.

In the embodiment, the value of (Wppmax ÷ Wppmin) is set 2.3 or less. However, from the viewpoint of the performance of the wobble signal detecting unit, signals can be detected stably even when the value of (Wppmax ÷ Wppmin) is 3 or less. Further, in the case of performing a more precise wobble detection, the value of (Wppmax ÷ Wppmin) may be set 2.0 or less. The wobble amplitude of the pre-groove area 1011 is set so as to satisfy the above conditions.

When the track loop is OFF as shown in (b) of FIG. 24, a track displacement detection signal appear from the optical head. A maximum amplitude of the track displacement detection signal at this moment is denoted as (I1-I2)pp. The value of the (I1-I2)pp is obtained by determining the difference between the signal I1 detected from the light detection cell 1025-1 and the signal I2 detected from the light detection cell 1025-2. The obtained signal goes through a low pass filter of shutdown frequency (cut-off frequency) of 30 kHz and then is processed. The low pass filter is configured by a primary filter. Further, the value of the (I1-I2)pp is measured in the unrecorded data area (DTA) and the data lead-in area (DTLDI) or data lead-out area (DTLDO) of the unrecorded area.

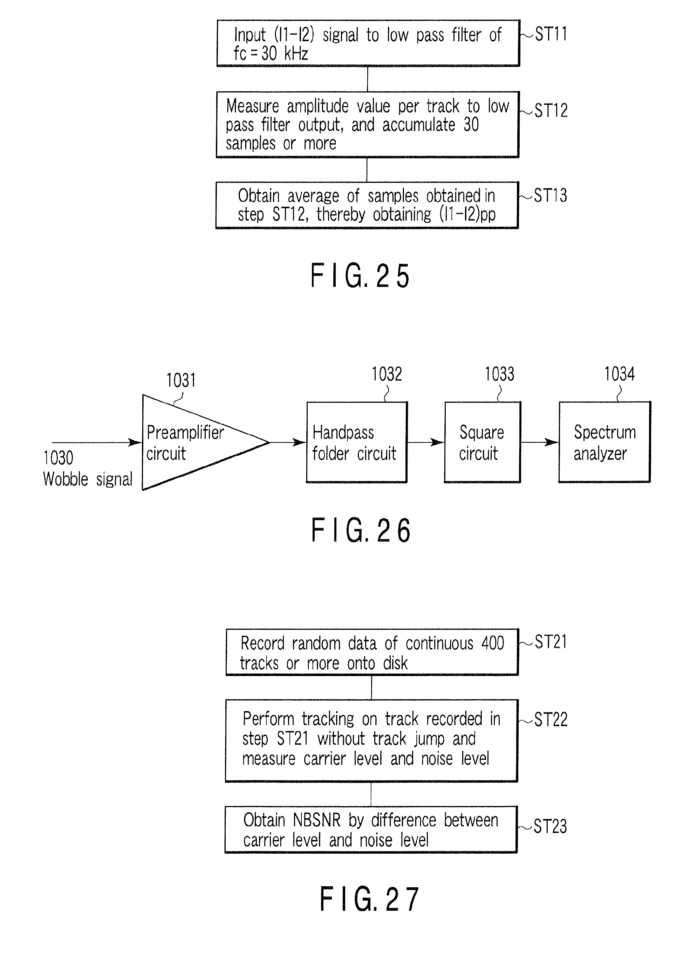

Now, with reference to FIG. 25, a method of measuring the amplitude value (I1-I2)pp of the track displacement detection signal will be described.

Since the following flowchart can be made of circuit blocks, each step of the flowchart can be defined as a block. In step ST11, the signal (I1-I2) obtained from the optical head shown in (a) of FIG. 24 is input to a low pass filter whose shutdown frequency (cut-off frequency) fc is 30 kHz.

In step ST12, the amplitude value per track is measured with respect to the low pass filter output, and 30 samples or more are accumulated.

By obtaining the average of the samples obtained in step ST12, (I1-I2)pp is obtained in step ST13.

The wobble signal detecting unit (not shown) detects the wobble signal, and also detects the track displacement detection signal by use of the same detecting circuit. By detecting both the wobble signal and the track displacement detection signal by the wobble signal detecting unit (not shown), it is possible to process (use together) two tasks by one detecting circuit, and accordingly, the circuit can be simplified.

NBSNR measuring method

Now, with reference to the flowchart in FIG. 27, a specific method of measuring NBSNR will be described. Since the following flowchart can be made of circuit blocks, each step of the flowchart can be defined as a block. First, random data of continuous 400 tracks or more is recorded onto the information recording medium (step ST21). Next, while tracking is performed on the track recorded in step ST21 without track jump, the carrier level and the noise level are measured (step ST22). NBSNR is obtained based on the difference between the carrier level and the noise level measured in step ST22 (step ST23).

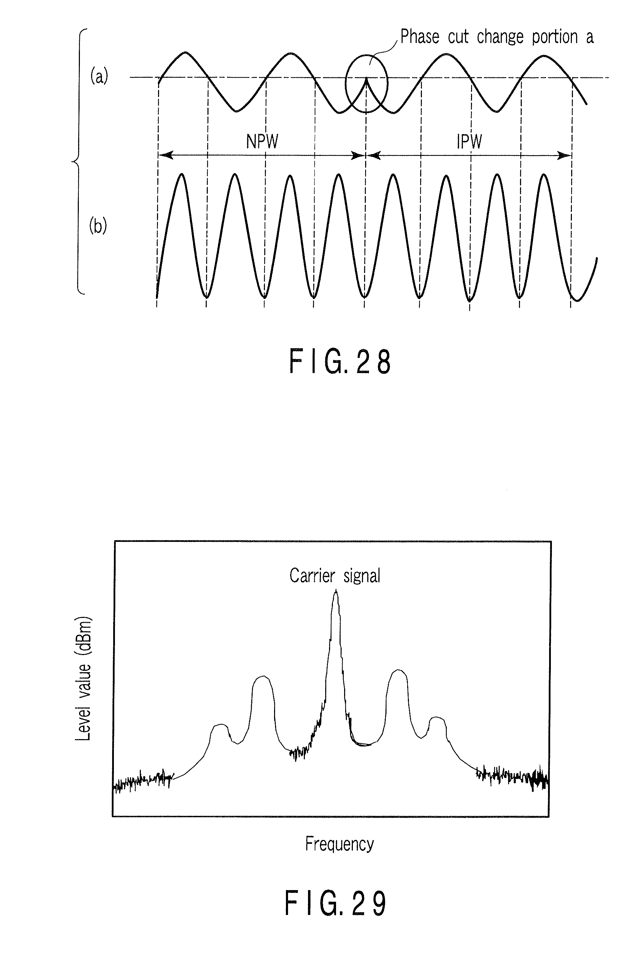

Next, the reason why a square circuit (1033 in FIG. 26) has been used for measuring the C/N ratio of the wobble detection signal will be explained. As shown in FIG. 28, wobble detection signals are given by phase modulation in the embodiment using the H format. In the case of phase modulation, there are many frequency components at a switch portion α of a change portion (between NPW and IPW) of the phase as shown in (a) of FIG. 28. Therefore, when the waveform of the wobble detection signal in (a) of FIG. 28 is analyzed by the spectrum analyzer 1034, there appears a large peak around the carrier as shown in FIG. 29. This makes it difficult to regulate the noise level.

In comparison with this, when the square of the wobble detection signal modulated by the phase modulation is taken as shown in (b) of FIG. 28, the squared waveforms in the IPW area and in the NPW area become same. Accordingly, there is no portion like the switch portion of the phase, very stable signals can be obtained, and there is no raised portion around the carrier signal in FIG. 29. As a result, carrier level signals of single peak can be obtained.

According to the various embodiments mentioned above, those skilled in the art can realize the present invention, further, it may be well understood by those skilled in the art that various modifications of these embodiments may be made, and applied to various embodiments without innovative capability. Therefore, the present invention ranges to the scope that does not contradict the principle and novel characteristics disclosed herein, and it is not limited to the embodiments mentioned above.

## Claims

1. An optical disk **characterized by** comprising:

   a transparent substrate layer (11) provided at a light incidence side;
   a first groove of a first depth (H1);
   a first information layer (12), the first information layer recording information therein; an adhesive layer (13);
   a second groove of a second depth (H2) that is deeper than the first depth; and
   a second information layer (14), the second information layer recording information therein, wherein
   the first depth and the second depth are $\lambda/2n$ or less by use of a wavelength $\lambda$,
   the width of the first and second grooves is 0.3 $\mu$m or less,
   the track pitch of the first and second grooves is 0.45 $\mu$m or less,
   the first and second information layers include an organic dye material having light absorption in the range of the wavelength $\lambda$ of laser beam for use in recording and reproducing information from 390 nm to 420 nm.

2. An optical disk according to claim 1, **characterized in that** the first groove is formed in the first information layer, and the second groove is formed in the second information layer.

3. An optical disk according to claim 1, **characterized in that** the thickness of the transparent substrate layer is 580 $\mu$m or more and 600 $\mu$m or less.

4. An optical disk according to claim 1, **characterized in that** the thickness of the adhesive layer is 20 $\mu$m or more and 35 $\mu$m or less.

5. An optical disk according to claim 1, **characterized in that** the reflectance of the transparent substrate layer, the first and second information layers and the adhesive layer with respect to the wavelength of the laser beam is 3% or more and 10% or less.

6. An optical disk according to claim 1, **characterized in that** the reflectance from the second information layer is 0.8 times or more and 1.2 times or less the reflectance from the first information layer.

7. An optical disk according to claim 1, **characterized in that** in the first information layer and the second information layer, the reflectance of a recorded area where information has been recorded is higher than that of an unrecorded area where information is not recorded.

8. An optical disk according to claim 2, **characterized in that** among the grooves formed in the first and second information layers, recording is performed to only the groove closer to the laser beam incidence side.

9. An optical disk according to claim 1, **characterized in that** the first groove is formed in the transparent substrate layer, and the second groove is formed in a substrate layer formed on the second information layer.

**10.** An optical disk according to claim 1, **characterized in that** the first groove is formed in the transparent substrate layer, and the second groove of the second information layer is formed in the adhesive layer.

**11.** An optical disk according to claim 1, **characterized in that** the first groove is formed in the adhesive layer, and the second groove of the second information layer is formed in a substrate layer formed on the second information layer.

**12.** An optical disk according to claim 1, **characterized in that** the first groove and the second groove are both formed in the adhesive layer.

**13.** An optical disk apparatus **characterized by** comprising:

processor circuitry for communicating with at least on optical disk, the optical disk comprising:

a transparent substrate layer (11) at a light incidence side;
a first groove of a first depth (H1);
a first information layer (12), the first information layer recording information therein;
an adhesive layer (13);
a second groove of a second depth (H2) that is deeper than the first depth; and
a second information layer (14), the second information layer recording information therein, wherein
the first depth and the second depth are $\lambda/2n$ or less by use of a wavelength $\lambda$,
the width of the first and second grooves is 0.3 $\mu$m or less,
the track pitch of the first and second grooves is 0.45 $\mu$m or less,
the first and second information layers include an organic dye material having light absorption in the range of the wavelength $\lambda$ of laser beam for use in recording and reproducing information from 390 nm to 420 nm.

**14.** The optical disk apparatus according to claim 13, **characterized in that** the processor circuitry is configured to record information on the optical disk.

**15.** The optical disk apparatus according to claim 13, **characterized in that** the processor is further configured to reproduce information stored on the optical disk.

**16.** The optical disk apparatus according to claim 13, **characterized by** further comprising forming the first groove in the transparent substrate layer, and forming the second groove in a substrate layer formed on the second information layer.

**17.** The optical disk apparatus according to claim 13, **characterized by** further comprising forming first groove in the transparent substrate layer, and forming the second groove in the adhesive layer.

**18.** The optical disk apparatus according to claim 13, **characterized by** further comprising forming the first groove in the adhesive layer, and forming the second groove in a substrate layer formed on the second information layer.

**19.** The optical disk apparatus according to claim 13, **characterized by** further comprising forming the first groove and the second groove in the adhesive layer.

**20.** An optical disk apparatus according to claim 1, **characterized in that** the thickness of the transparent substrate layer is 580 $\mu$m or more and 600 $\mu$m or less.

D

15

H2

14

13

12

H1

11

FIG.1    ⬆ Laser beam

D

27

26
25

24

23
22

21

FIG.2    ⬆ Laser beam

D

37
36
35
38
34
33
32
31

FIG. 3

⇧ Laser beam

FIG. 4

FIG. 5

FIG. 6

F I G. 7

F I G. 8

FIG. 9

FIG. 10

FIG. 11

FIG. 12

D

75

74

73

72

71

⇧ Laser beam

**FIG. 13**

D

85

84

83

82

81

⇧ Laser beam

**FIG. 14**

FIG. 15

Laser beam

FIG. 16

Laser beam

F I G. 1 7

EP 1 835 493 A2

| Parameter | | One-layer structure | Two-layer structure |
|---|---|---|---|
| Usable recording capacity | | 15 Gbytes/side | 30 Gbytes/side |
| Used wavelength | | 405 nm | 405 nm |
| NA value of objective lens | | 0.65 | 0.65 |
| Data bit length | (A) | 0.306 $\mu$m | 0.306 $\mu$m |
| | (B) | 0.153 $\mu$m | 0.153 $\mu$m |
| Channel bit length | (A) | 0.204 $\mu$m | 0.204 $\mu$m |
| | (B) | 0.102 $\mu$m | 0.102 $\mu$m |
| Minimum mark/bit length (2T) | (A) | 0.408 $\mu$m | 0.408 $\mu$m |
| | (B) | 0.204 $\mu$m | 0.204 $\mu$m |
| Maximum mark/bit length (13T) | (A) | 2.652 $\mu$m | 2.652 $\mu$m |
| | (B) | 1.326 $\mu$m | 1.326 $\mu$m |
| Track pitch | (A) | 0.68 $\mu$m | 0.68 $\mu$m |
| | (B) | 0.40 $\mu$m | 0.40 $\mu$m |
| Physical address setting method | (B) | Wobble address | Wobble address |
| Outer diameter of information recording medium | | 120 mm | 120 mm |
| Total thickness of information recording medium | | 1.20 mm | 1.20 mm |
| Diameter of center hole | | 15.0 mm | 15.0 mm |
| Inner radius of data area DTA | | 24.1 mm | 24.6mm (Layer 0) 24.7mm (Layer 1) |
| Outer radius of data area DTA | | 58.0 mm | 58.1 mm |
| Sector size | | 2048 bytes | 2048 bytes |
| ECC (Error Correction Code) | | Reed-Solomon product code RS(208,192,17)XRS (182,172,11) | Reed-Solomon product code RS(208,192,17)XRS (182,172,11) |
| ECC block size | | 32 physical sectors | 32 physical sectors |
| Modulation method | | ETM,RLL (1,10) | ETM,RLL (1,10) |
| Error correctable error length | | 7.1 mm | 7.1 mm |
| Linear velocity | | 6.61 m/s | 6.61 m/s |
| Channel bit transfer rate | (A) | 32.40 Mbps | 32.40 Mbps |
| | (B) | 64.80 Mbps | 64.80 Mbps |
| User data transfer rate | (A) | 18.28 Mbps | 18.28 Mbps |
| | (B) | 36.55 Mbps | 36.55 Mbps |

(A)'s denote numeric values in system lead-in area SYLDI
and system lead-out area SYLDO.
(B)'s denote numeric values in data lead-in area DTLDI,
data area DTA, middle area, and data lead-out area DTLDO.

FIG.18

F I G. 1 9

**FIG. 20**

(a) Wobble data unit #0 560

| Modulation area 598 | | | Non-modulation area 593 |
|---|---|---|---|
| IPW | NPW | IPW | NPW |
| 6 wobbles | 4 wobbles | 6 wobbles | 68 wobbles |

(b) Wobble data unit #0 560

| Modulation area 592 | Modulation area 598 | | | Non-modulation area 593 |
|---|---|---|---|---|
| NPW | IPW | NPW | IPW | NPW |
| 42 wobbles | 6 wobbles | 4 wobbles | 6 wobbles | 26 wobbles |

(c) Wobble data unit #1 561 ~ #11 571

| Modulation area 598 | | | | Non-modulation area 593 |
|---|---|---|---|---|
| IPW | Address bit #2 | Address bit #1 | Address bit #0 | NPW |
| 4 wobbles | 4 wobbles | 4 wobbles | 4 wobbles | 68 wobbles |

(d) Wobble data unit #1 561 ~ #11 571

| Non-modulation area 592 | Modulation area 598 | | | | Non-modulation area 593 |
|---|---|---|---|---|---|
| NPW | IPW | Address bit #2 | Address bit #1 | Address bit #0 | NPW |
| 42 wobbles | 4 wobbles | 4 wobbles | 4 wobbles | 4 wobbles | 26 wobbles |

29

FIG.21

(a)

| Wobble sink area | Reserved area | Physical segment address | Zone address | Parity information | Groove track address | Land track address | Unity area |
|---|---|---|---|---|---|---|---|
| 3 bits | 3 address bits | 6 address bits | 5 bits | 1 address bits | 12 bits | 12 bits | 9 address bits |

580　604　601　602　605　606　607　608　610

Wobble address information

(b)

| Wobble sink area | Type identification information | Layer number information | Reserved area | Physical segment order information | Data segment address (number) (ECC block address) | CRC code | Unity area |
|---|---|---|---|---|---|---|---|
| 3 bits | 1 bits | 1 bits | 1 bits | 3 address bits | 18 address bits | 9 bits | 15address bits |

580　721　722　723　724　725　726　609　610

Wobble address information

(c)

| Wobble sink area | Segment information | Physical segment block address | Physical segment order information | CRC code | Unity area |
|---|---|---|---|---|---|
| 3 bits | 3 address bits | 18 address bits | 3 address bits | 9 bits | 15 address bits |

580　727　728　724　726　609　610

Wobble address information

| Type identification information | Reserved area |
|---|---|
| 1 bits | 2 bits |

721　723

FIG.22

501 Group area

502 Group area

505 Group area

508 Group area

506 Group area

Shift

Shift

Shift

701 Primary position of modulation area

702 Secondary position of modulation area

| Input wobble signal to spectrum analyzer | ~ST01 |

| Adjust linear velocity such that wobble signal frequency becomes specified value | ~ST02 |

| Measure maximum value Cwmax and minimum value Cwmin of carrier level at every 4 tracks | ~ST03 |

| Calculate Wppmax value and Wppmin value from Cwmax and Cwmin | ~ST04 |

## FIG. 23

FIG. 24

Input (I1−I2) signal to low pass filter of fc = 30 kHz ～ST11

Measure amplitude value per track to low pass filter output, and accumulate 30 samples or more ～ST12

Obtain average of samples obtained in step ST12, thereby obtaining (I1−I2)pp ～ST13

## F I G. 2 5

1031

1030
Wobble signal

Preamplifier circuit

1032
Handpass folder circuit

1033
Square circuit

1034
Spectrum analyzer

## F I G. 2 6

Record random data of continuous 400 tracks or more onto disk ～ST21

Perform tracking on track recorded in step ST21 without track jump and measure carrier level and noise level ～ST22

Obtain NBSNR by difference between carrier level and noise level ～ST23

## F I G. 2 7

FIG. 28

FIG. 29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. NAGAI.** *Jpn. J. Appl. Phys.,* 2003, vol. 42, 971